# EUROPEAN PATENT APPLICATION

(11) **EP 4 597 823 A1**
(43) Date of publication of application: **06.08.2025**
(21) Application number: 25153996.1
(22) Date of filing: 27.01.2025
(51) Int. Cl.: H02P 3/22

(54) **BRAKE CHOPPER, CONTROL BOARD, BUS VOLTAGE CONTROL METHOD, DEVICE AND MEDIUM**

(30) Priority: 30.01.2024 CN 202410129935
(71) Applicant: Siemens Healthineers AG, 91301 Forchheim (DE)
(72) Inventor: SUN, Zhi Wei, Shanghai 201318 (CN); MODEL, Volker, 90766 Fürth (DE); MEYNDT, Martin, 91080 Uttenreuth (DE); LIU, Lei, Shanghai 201318 (CN); DING, Zhu Gao, Shanghai 201316 (CN); LIU, Bing, Shanghai 201318 (CN)
(74) Representative: HKW Intellectual Property PartG mbB

(57) **Abstract**

Embodiments of the present invention disclose a brake chopper, a control board, a bus voltage control method, a device and a medium. The brake chopper comprises: a resistor module, electrically connected to a DC bus to form an energy release circuit of the DC bus; a control module, for determining the difference between a voltage value of the DC bus and a preset first threshold, and generating a first switch control signal on the basis of the difference; and a switch module, for controlling the ON time of the energy release circuit on the basis of the first switch control signal, wherein there is a progressively increasing relationship between the ON time and the difference. The ON time of the energy release circuit is precisely controlled on the basis of the difference between the DC bus voltage value and the first threshold, increasing the energy utilization rate of the DC bus. An onboard brake chopper is realized, reducing installation space and assembly costs. When the temperature of the resistor module is too high, the energy release circuit is disconnected to provide protection. Multiple switch protection is achieved through multiple field effect transistor stages, increasing safety

## Description

### TECHNICAL FIELD

The present invention relates to the technical field of electronic devices, in particular a brake chopper, a control board, a bus voltage control method, a device and a medium.

### BACKGROUND ART

Electric motor control is generally used in motion systems configured for single-axle motion or multi-axle motion. During electric motor stopping or braking, the back emf of the electric motor feeds back energy, causing the DC bus voltage to rise and cause overvoltage, which might result in damage to the electric motor driver. By using a brake chopper to dissipate this portion of energy as heat, the DC bus voltage can be kept stable.

The issue of how to improve the performance of a brake chopper is a technical problem which is still in need of a solution.

### SUMMARY OF THE INVENTION

Embodiments of the present invention propose a brake chopper, a control board, a bus voltage control method, a device and a medium.

A brake chopper, comprising:
a resistor module, electrically connected to a DC bus to form an energy release circuit of the DC bus;
a control module, for determining the difference between a voltage value of the DC bus and a preset first threshold, and generating a first switch control signal on the basis of the difference;
a switch module, for controlling the ON time of the energy release circuit on the basis of the first switch control signal, wherein there is a progressively increasing relationship between the ON time and the difference.

As can be seen, in embodiments of the present invention, the difference between the DC bus voltage value and a preset threshold is used to precisely control the ON time of the energy release circuit, wherein there is a progressively increasing relationship between the ON time and the difference. Thus, the greater the difference (and correspondingly, the greater the DC bus voltage value), the longer the ON time, so as to ensure full release of energy; the smaller the difference (and correspondingly, the smaller the DC bus voltage value), the shorter the ON time, to prevent excessive release of energy. Thus, in embodiments of the present invention, the ON time can be controlled adaptively on the basis of the DC bus voltage value, increasing the energy utilization rate of the DC bus.

In an embodiment, the following is included:
a temperature sensor close to the resistor module;
the control module being configured to acquire a temperature detection value of the temperature sensor, and generate a second switch control signal when the temperature detection value is greater than or equal to a preset second threshold; and the switch module being configured to disconnect the energy release circuit on the basis of the second switch control signal; or
the temperature sensor being configured to generate a third switch control signal when a temperature detection value is greater than or equal to a preset second threshold; and the switch module being configured to disconnect the energy release circuit on the basis of the third switch control signal.

Thus, in embodiments of the present invention, a temperature sensor is arranged close to the resistor module, and when the temperature of the resistor module is too high, the energy release circuit can be disconnected automatically to protect the resistor module and increase safety.

In an embodiment, the following is included:
a switch driving module, arranged between the control module and the switch module, and configured to drive the switch module on the basis of the first switch control signal, the second switch control signal and/or the third switch control signal.

As can be seen, driving of the switch module with multiple types of signals is realized on the basis of the switch driving module.

In an embodiment, the control module is configured to determine a connection state of the resistor module on the basis of a second difference between a low-side potential value of the resistor module and the voltage value of the DC bus when the energy release circuit is in a disconnected state.

Thus, in embodiments of the present invention, a self-check function for the resistor module is realized through the difference between the low-side potential value of the resistor module and the voltage value of the DC bus.

In an embodiment, the switch module comprises a first MOSFET (metal-oxide semiconductor field-effect transistor) and a second MOSFET;
the drain of the first MOSFET is connected to the resistor module, the source of the first MOSFET is connected to the drain of the second MOSFET, and the gate of the first MOSFET is connected to the control module; the gate of the second MOSFET is connected to the control module, and the source of the second MOSFET is grounded;
the first switch control signal is adapted to keep the second MOSFET switched ON continuously, and to switch the first MOSFET ON for the duration of the ON time.

Thus, multiple switch protection is achieved through multiple field effect transistor stages, increasing safety.

A control board, comprising:
a substrate;
a DC bus arranged on the substrate;
a resistor module, arranged on the substrate and electrically connected to the DC bus to form an energy release circuit of the DC bus;
a motor driving module, arranged on the substrate and configured to drive an electric motor on the basis of the DC bus;
a control module, arranged on the substrate and configured to control the motor driving module, determine the difference between a voltage value of the DC bus and a preset first threshold, and generate a first switch control signal on the basis of the difference; and
a switch module, arranged on the substrate and configured to control the ON time of the energy release circuit on the basis of the first switch control signal, wherein there is a progressively increasing relationship between the ON time and the difference.

Thus, by integrating a brake chopper in a control board, an onboard brake chopper is realized, which can reduce the installation space and assembly cost of the brake chopper.

In an embodiment, the switch module comprises a first MOSFET and a second MOSFET;
the drain of the first MOSFET is connected to the resistor module, the source of the first MOSFET is connected to the drain of the second MOSFET, and the gate of the first MOSFET is connected to the control module;
the gate of the second MOSFET is connected to the control module, and the source of the second MOSFET is grounded;
the first switch control signal is adapted to keep the second MOSFET switched ON continuously, and to switch the first MOSFET ON for the duration of the ON time.

Thus, multiple switch protection is achieved through multiple field effect transistor stages, increasing safety.

In an embodiment, a heat dissipating layer is included, arranged at the bottom of the substrate, and configured to dissipate heat from the DC bus, the resistor module, the motor driving module, the control module and the switch module.

Thus, sharing the heat dissipating layer of the control board obviates the need to provide an additional heat dissipating device for the brake chopper, so costs are reduced and the degree of integration of the control board is increased.

A bus voltage control method, comprising:
determining a voltage value of a DC bus;
determining the difference between the voltage value of the DC bus and a preset first threshold;
generating a first switch control signal on the basis of the difference;
controlling the ON time of an energy release circuit on the basis of the first switch control signal, wherein there is a progressively increasing relationship between the ON time and the difference.

As can be seen, in embodiments of the present invention, the difference between the DC bus voltage value and a preset threshold is used to precisely control the ON time of the energy release circuit, wherein there is a progressively increasing relationship between the ON time and the difference. Thus, the greater the difference (and correspondingly, the greater the DC bus voltage value), the longer the ON time, so as to ensure full release of energy; the smaller the difference (and correspondingly, the smaller the DC bus voltage value), the shorter the ON time, to prevent excessive release of energy. Thus, in embodiments of the present invention, the ON time can be controlled adaptively on the basis of the DC bus voltage value, increasing the energy utilization rate of the DC bus.

In an embodiment, the following is included:
acquiring a temperature detection value from a temperature sensor close to the resistor module;
when the temperature detection value is greater than or equal to a preset second threshold, generating a second switch control signal;
disconnecting the energy release circuit on the basis of the second switch control signal.

Thus, in embodiments of the present invention, a temperature sensor is arranged close to the resistor module, and when the temperature of the resistor module is too high, the energy release circuit can be disconnected automatically to protect the resistor module and increase safety.

In an embodiment, the step of generating a first switch control signal on the basis of the difference comprises:
generating a PWM signal on the basis of the difference, the PWM signal having a duty cycle which has a progressively increasing relationship with the difference.

Thus, the ON time can be controlled flexibly on the basis of the duty cycle setting of the PWM signal.

In an embodiment, the following is included:
acquiring a low-side potential value of the resistor module when the energy release circuit is in a disconnected state;
determining a connection state of the resistor module on the basis of the difference between the low-side potential value of the resistor module and the voltage value of the DC bus; wherein, when the second difference is zero, the connection state of the resistor module is determined to be compliant, and when the second difference is not zero, the connection state of the resistor module is determined to be non-compliant.

Thus, in embodiments of the present invention, a self-check function for the resistor module is realized through the difference between the low-side potential value of the resistor module and the voltage value of the DC bus.

An electronic device, comprising:
a processor;
a memory for storing an executable instruction of the processor;
the processor being configured to read the executable instruction from the memory and execute the executable instruction to implement the bus voltage control method described above.

A computer-readable storage medium on which a computer instruction is stored, wherein the bus voltage control method described above is implemented when the computer instruction is executed by a processor.

### BRIEF DESCRIPTION OF THE DRAWINGS

Preferred embodiments of the present invention are described in detail below with reference to the drawings, to give those skilled in the art a clearer understanding of the abovementioned and other features and advantages of the present invention. In the drawings:
Fig. 1 is a demonstrative structural drawing of a brake chopper according to embodiments of the present invention.
Fig. 2 is a demonstrative circuit diagram of a brake chopper according to embodiments of the present invention.
Fig. 3 is a demonstrative schematic diagram showing the correspondence between the bus voltage and the switch control signal according to embodiments of the present invention.
Fig. 4 is a demonstrative structural drawing of a control board according to embodiments of the present invention.
Fig. 5 is a demonstrative flow chart of a bus voltage control method according to embodiments of the present invention.
Fig. 6 is a demonstrative structural drawing of an electronic device according to embodiments of the present invention.

**Key to the drawings:**

| Label | Meaning |
|---|---|
| 10 | Brake chopper |
| 11 | DC bus |
| 12 | Resistor module |
| 13 | Control module |
| 14 | Switch module |
| 15 | Switch driving module |
| 16 | Temperature sensor |
| 20 - 21 | High-impedance operational amplifier |
| 22 | Inverter |
| R1 - R4 | Power resistor |
| R5 - R6 | Grounding resistor |
| Q1 | First MOSFET |
| Q2 | Second MOSFET |
| 30 | DC bus voltage curve |
| 31 | HI signal curve |
| 32 | LI signal curve |
| 33 | HO signal curve |
| 34 | LO signal curve |
| 51 | First waveform |
| 52 | Second waveform |
| 53 | Third waveform |
| 54 | Fourth waveform |
| 61 | Fifth waveform |
| 62 | Sixth waveform |
| 63 | Seventh waveform |
| 64 | Eighth waveform |
| 40 | Substrate |
| 41 | Motor driving module |
| 42 | Heat dissipating layer |
| 50 | Control board |
| 501 - 504 | Steps |
| 600 | Electronic device |
| 601 | Processor |
| 602 | Memory |

### DETAILED DESCRIPTION OF THE INVENTION

To clarify the objective, technical solution and advantages of the present invention, the present invention is explained in further detail below by way of embodiments. A noun or pronoun referring to a person in the present patent application is not limited to a specific gender.

The solutions of the present invention are expounded below by describing a number of representative embodiments, in order to make the description concise and intuitive. The large number of details in the embodiments are merely intended to assist with understanding of the solutions of the present invention. However, obviously, the technical solutions of the present invention need not be limited to these details when implemented. To avoid making the solutions of the present invention unnecessarily obscure, some embodiments are not described meticulously, but merely outlined. Hereinbelow, "comprises" means "including but not limited to", while "according to..." means "at least according to..., but not limited to only according to...". In line with the linguistic customs of Chinese, in cases where the quantity of a component is not specified hereinbelow, this means that there may be one or more of the component; this may also be interpreted as meaning at least one.

In a variable-frequency speed regulating system, a given frequency of the electric motor is gradually reduced to reduce the speed of the electric motor. However, when the inertia of the electric motor traction system is high, the actual speed of the electric motor is higher than its synchronous speed; the rotor windings of the electric motor cut the lines of magnetic force of the rotating magnetic field in the opposite direction to that during constant-speed operation of the electric motor, and the induced emf in the rotor windings is opposite to the direction of current, so the electric motor experiences negative torque, with kinetic energy of the traction system being fed back to the DC bus of the frequency converter. This causes the DC bus voltage to rise continuously, possibly damaging the frequency converter. If the kinetic energy fed back by the traction system is dissipated as heat using a brake chopper, the DC bus voltage can be kept stable.

The applicant has discovered that in a brake chopper in the prior art, a fixed switch control signal is used to control the ON time of an energy release circuit. However, the voltage value of the DC bus is generally variable; with the fixed switch control signal, it is difficult to adapt to voltage value changes, making it difficult to ensure the energy utilization rate of the DC bus. Furthermore, brake choppers in the prior art are widely implemented as independent products positioned externally on an electric motor control board, and require a large amount of space for installation, as well as having high assembly costs. In addition, brake choppers in the prior art typically lack switch protection and resistor overheating protection. Brake choppers in the prior art also typically lack a self-check function for the resistor.

In embodiments of the present invention, the difference between the DC bus voltage value and a preset threshold is used to precisely control the ON time of the energy release circuit, thereby increasing the energy utilization rate of the DC bus. In addition, in embodiments of the present invention, the brake chopper is integrated in the control board; the onboard brake chopper can reduce installation space and assembly costs, as well as cooling costs. Furthermore, a temperature sensor is arranged close to the resistor module; when the temperature of the resistor module is too high, the energy release circuit can be disconnected automatically to increase the safety of the resistor module. Moreover, in embodiments of the present invention, multiple switch protection is achieved through multiple field effect transistor stages, thus increasing switch safety. In addition, in embodiments of the present invention, a resistor self-check function is also realized by comparing a resistor low-side potential value with a DC bus voltage value.

The disclosure above has provided a detailed explanation of the technical deficiencies in the prior art, the reasons for these technical deficiencies, and the thought and analysis processes for overcoming them. In fact, the recognition of the abovementioned technical deficiencies is not common knowledge in the art, but rather is an original discovery made by the applicant in the course of research. In addition, the tracing of the reasons for these technical deficiencies and the thought and analysis processes for overcoming them are the results of gradual analysis achieved by the applicant in the course of actual research, and not common knowledge in the art.

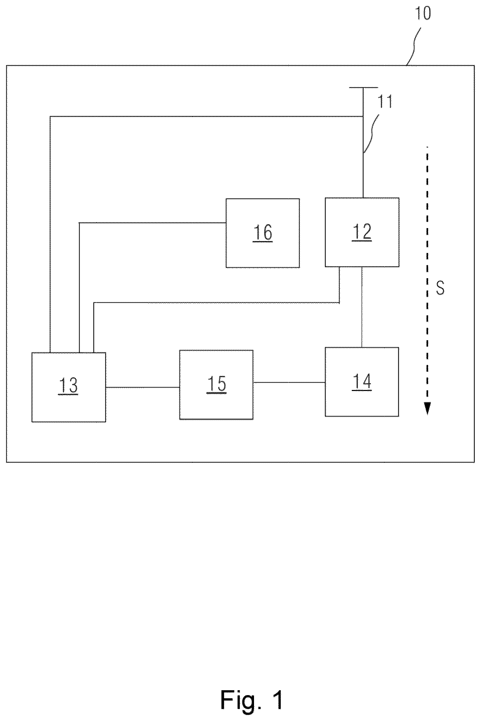

Fig. 1 is a demonstrative structural drawing of a brake chopper according to embodiments of the present invention. As shown in Fig. 1, the brake chopper 10 comprises:
a resistor module 12, electrically connected to a DC bus 11 to form an energy release circuit of the DC bus 11; a control module 13, for determining the difference between a voltage value of the DC bus 11 and a preset first threshold, and generating a first switch control signal on the basis of the difference; and a switch module 14, for controlling the ON time of the energy release circuit on the basis of the first switch control signal, wherein there is a progressively increasing relationship between the ON time and the difference. The progressively increasing relationship between the ON time and the difference may be a linear progressively increasing relationship or a non-linear progressively increasing relationship. For example, if the progressively increasing relationship is a linear progressively increasing relationship, the ON time increases linearly as the difference increases; if the progressively increasing relationship is a non-linear progressively increasing relationship, the ON time increases non-linearly as the difference increases.

In an embodiment, the resistor module 12 may be implemented as multiple resistors of lower resistance, connected in parallel with each other; or may be implemented as one or more resistors of higher resistance, connected in series with each other; or may be implemented as a hybrid connected structure comprising one or more parallel-connected resistors and one or more series-connected resistors. The DC bus 11 and the resistor module 12 are electrically connected to form the energy release circuit of the DC bus 11 (as shown by the arrow S in Fig. 1). The switch module 14 is arranged in the energy release circuit, and configured to switch the energy release circuit of the DC bus 11 ON or OFF.

The first threshold is set in the control module 13. The value of the first threshold may be fixed or adjustable. Preferably, the value of the first threshold is adjustable. The control module 13 detects the voltage value of the DC bus 11, calculates the difference between the voltage value of the DC bus 11 and the first threshold, and generates the first switch control signal on the basis of the difference. The first switch control signal generated by the control module 13 is adapted to control the switch module 14 and thereby control the ON time of the energy release circuit, wherein there is a progressively increasing relationship between the ON time represented by the first switch control signal and the difference. Thus, in embodiments of the present invention, the difference between the DC bus voltage value and the first threshold is used to precisely control the ON time of the energy release circuit. The greater the difference (and correspondingly, the greater the DC bus voltage value), the longer the ON time of the energy release circuit, so as to ensure full release of energy; the smaller the difference (and correspondingly, the smaller the DC bus voltage value), the shorter the ON time of the energy release circuit, to prevent excessive release of energy. In embodiments of the present invention, the ON time of the energy release circuit can be controlled adaptively on the basis of the DC bus voltage value, to increase the energy utilization rate of the DC bus.

In an embodiment, the brake chopper 10 comprises: a temperature sensor 16 close to the resistor module 12; the control module 13, for acquiring a temperature detection value of the temperature sensor 16, and generating a second switch control signal when the temperature detection value is greater than or equal to a preset second threshold; and the switch module 14, for disconnecting the energy release circuit on the basis of the second switch control signal.

Thus, in embodiments of the present invention, the temperature sensor 16 is arranged close to the resistor module 12, and when the temperature of the resistor module 12 is too high, the control module 13 generates the second switch control signal adapted to disconnect the energy release circuit, and the switch module 14 then disconnects the energy release circuit on the basis of the second switch control signal, thereby protecting the resistor module 12 and increasing safety. In this embodiment, the control module 13 generates the control signal for disconnecting the energy release circuit, so the control capability of the control module 13 is increased.

In an embodiment, the brake chopper 10 comprises: the temperature sensor 16 close to the resistor module 12, the temperature sensor 16 being configured to generate a third switch control signal when the temperature detection value is greater than or equal to the preset second threshold; and the switch module 14, for disconnecting the energy release circuit on the basis of the third switch control signal.

Thus, in embodiments of the present invention, the temperature sensor 16 is arranged close to the resistor module 12, and when the temperature of the resistor module 12 is too high, the temperature sensor 16 generates the third switch control signal adapted to disconnect the energy release circuit, and the switch module 14 then disconnects the energy release circuit on the basis of the third switch control signal, thereby protecting the resistor module 12 and increasing safety. In this embodiment, the temperature sensor 16 is used to generate the control signal for disconnecting the energy release circuit, so the response time is reduced and the circuit disconnection efficiency is increased.

In an embodiment, the brake chopper 10 comprises: a switch driving module 15, arranged between the control module 13 and the switch module 14, and configured to drive the switch module 14 on the basis of the first switch control signal, the second switch control signal and/or the third switch control signal. For example, the switch driving module 15 may amplify the power of the first switch control signal, the second switch control signal and/or the third switch control signal, so that it is sufficient to drive the switch module 14.

In an embodiment, the control module 13 is configured to determine a connection state of the resistor module 12 on the basis of a second difference between a low-side potential value of the resistor module 12 and the voltage value of the DC bus 11 when the energy release circuit is in a disconnected state. When the second difference is zero (i.e. the low-side potential value of the resistor module 12 and the voltage value of the DC bus 11 are the same), the connection state of the resistor module 12 is determined to be compliant; when the second difference is not zero (i.e. the low-side potential value of the resistor module 12 and the voltage value of the DC bus 11 are not the same), the connection state of the resistor module 12 is determined to be non-compliant.

For example, when the brake chopper is activated, the energy release circuit is in a disconnected state; at this time, the connection state of the resistor module 12 is determined on the basis of the second difference between the low-side potential value of the resistor module 12 and the voltage value of the DC bus 11. Thus, in embodiments of the present invention, a self-check function for the resistor module 12 is realized through the difference between the low-side potential value of the resistor module 12 and the voltage value of the DC bus 11.

In an embodiment, the switch module 14 comprises a first MOSFET and a second MOSFET; the drain of the first MOSFET is connected to the resistor module 12, the source of the first MOSFET is connected to the drain of the second MOSFET, and the gate of the first MOSFET is connected to the control module 13; the gate of the second MOSFET is connected to the control module 13, and the source of the second MOSFET is grounded; the first switch control signal is adapted to keep the second MOSFET switched ON continuously, and to switch the first MOSFET ON for the duration of the ON time. For example, the first MOSFET and the second MOSFET may be implemented as N-type MOSFETs. Thus, multiple switch protection is achieved through multiple field effect transistor stages, increasing safety.

A typical structure of the switch module 14 has been described demonstratively above, taking two MOSFETs as an example. Those skilled in the art will realize that such a description is merely demonstrative, and not intended to limit the scope of protection of embodiments of the present invention. For example, the switch module 14 could also be implemented as a junction field effect transistor (junction FET, JFET), or comprise a greater number of MOSFETs, or use a P-type MOSFET, etc.; the embodiments of the present invention impose no limitations in this respect.

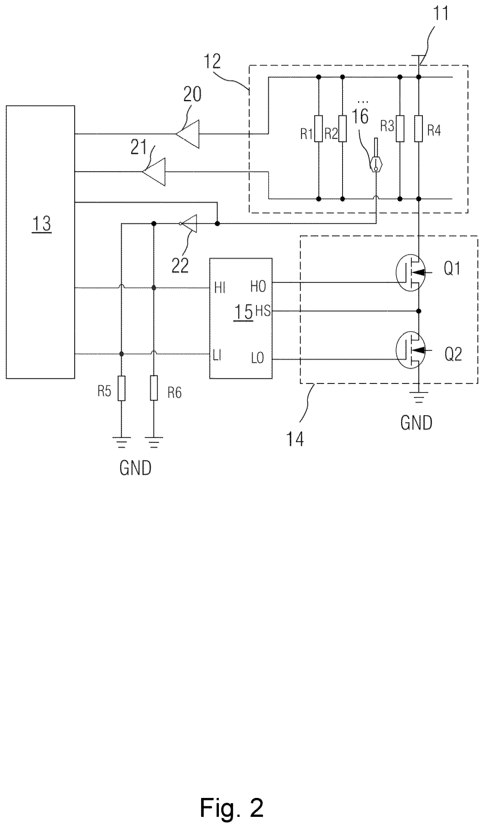

A demonstrative circuit structure of the brake chopper in embodiments of the present invention is described in specific terms below. Fig. 2 is a demonstrative circuit diagram of a brake chopper according to embodiments of the present invention.

In Fig. 2, the resistor module 12 comprises multiple power resistors R1 - R4, connected in parallel with each other. The high side of the resistor module 12 is connected to the DC bus 11 (for example, the nominal voltage of the DC bus 11 is 48 volts). The high side of the resistor module 12 is also connected to the control module 13 via a high-impedance operational amplifier 20. The low side of the resistor module 12 is connected to the switch module 14. The low side of the resistor module 12 is also connected to the control module 13 via a high-impedance operational amplifier 21. The switch module 14 is grounded (GND). The DC bus 11 and the resistor module 12 form the energy release circuit of the DC bus 11. The switch module 14 is arranged in the energy release circuit, and configured to switch the energy release circuit of the DC bus 11 ON or OFF.

When the brake chopper is activated, the energy release circuit is in a disconnected state. At this time, the control module 13 acquires the low-side potential value of the resistor module 12 via the high-impedance operational amplifier 21. In addition, the control module 13 acquires the voltage value of the DC bus 11 via the high-impedance operational amplifier 20. The control module 13 determines the connection state of the resistor module 12 on the basis of the difference between the low-side potential value of the resistor module and the voltage value of the DC bus 11. When the difference is zero (i.e. the low-side potential value and the voltage value of the DC bus 11 are both 48 volts), the connection state of the resistor module 12 is determined to be compliant; when the difference is not zero, the connection state of the resistor module 12 is determined to be non-compliant. Thus, in embodiments of the present invention, a self-check function for the resistor module 12 is realized through the difference between the low-side potential value of the resistor module 12 and the voltage value of the DC bus 11.

The first threshold is set in the control module 13. The first threshold is generally larger than the voltage value of the DC bus 11; for example, the first threshold may be set at 60 volts. The control module 13 acquires the voltage value of the DC bus 11 via the high-impedance operational amplifier 20. The control module 13 determines the difference between the voltage value of the DC bus and the first threshold, and on the basis of the difference, generates the first switch control signal adapted to control the ON time of the switch module 14, wherein there is a progressively increasing relationship between the ON time and the difference. The switch module 14 controls the ON time of the energy release circuit on the basis of the first switch control signal.

The temperature sensor 16 is close to the resistor module 12. The temperature sensor 16 continuously collects temperature detection values of the surrounding environment of the resistor module 12. The temperature sensor 16 can send the collected temperature detection values to the control module 13.

In an embodiment, the second threshold may be set in the control module 13. The second threshold may be fixed or adjustable. Preferably, the value of the second threshold is adjustable. When the control module 13 determines that the temperature detection value is greater than or equal to the second threshold, the control module 13 generates the second switch control signal, which is adapted to disconnect the energy release circuit. Optionally, the second threshold is set in the temperature sensor 16. When the temperature sensor 16 determines that the temperature detection value is greater than or equal to the preset second threshold, the temperature sensor 16 generates the third switch control signal, which is adapted to disconnect the energy release circuit.

Compared with the case where the control module 13 generates the second switch control signal, having the temperature sensor 16 generate the third switch control signal allows the disconnection of the energy release circuit to be controlled directly, reducing the response time and increasing the circuit disconnection efficiency, and also reducing the processing strain on the control module 13.

The switch driving module 15 is arranged between the control module 13 and the switch module 14. An input end of the switch driving module 15 comprises an HI terminal and an LI terminal. An output end of the switch driving module 15 comprises an HO terminal and an LO terminal. The switch driving module 15 receives the first switch control signal or the second switch control signal from the control module 13 via the HI terminal and the LI terminal, or receives the third switch control signal from the temperature sensor 16 via the HI terminal and the LI terminal. The switch driving module 15 subjects the first switch control signal, the second switch control signal or the third switch control signal to power amplification, so as to drive the switch module 14.

The temperature sensor 16 is connected to an inverter 22. The output of the inverter 22 is connected to the HI terminal and the LI terminal. The inverter 22 is grounded via grounding resistors R5 and R6. For example, the inverter 22 inverts the HIGH third switch control signal generated by the temperature sensor 16 to a LOW signal, so that the switch driving module 15 can drive the switch module 14 to disconnect the energy release circuit on the basis of the LOW third switch control signal.

The switch module 14 comprises the first MOSFET (Q 1) and the second MOSFET (Q2). The first MOSFET (Q 1) and the second MOSFET (Q2) are both N-type. The drain of the first MOSFET (Q 1) is connected to the resistor module 12, the source of the first MOSFET (Q1) is connected to the drain of the second MOSFET (Q2), and the gate of the first MOSFET (Q 1) is connected to the HO terminal of the switch driving module 15. The gate of the second MOSFET (Q2) is connected to the LO terminal of the switch driving module 15, and the source of the second MOSFET (Q2) is grounded (GND). A bootstrap terminal (HS) in the switch driving module 15 is further connected at the point of connection between the source of the first MOSFET and the drain of the second MOSFET (Q2). The switch driving module 15 provides a bootstrap signal for the switch module 14 via the bootstrap terminal (HS), so that an output signal of the switch module 14 is sufficient to offset the effect of a feedback signal.

When the input of the HI terminal is HIGH, the output of the HO terminal is HIGH, and the first MOSFET (Q 1) is ON. When the input of the HI terminal is LOW, the output of the HO terminal is LOW, and the first MOSFET (Q 1) is OFF. When the input of the LI terminal is HIGH, the output of the LO terminal is HIGH, and the second MOSFET (Q2) is ON. When the input of the LI terminal is LOW, the output of the LO terminal is LOW, and the second MOSFET (Q2) is OFF.

The first switch control signal is adapted to keep the second MOSFET (Q2) switched ON continuously, and to switch the first MOSFET (Q 1) ON for the duration of the ON time. For example, the first switch control signal comprises a HIGH HI signal (preferably a PWM signal with a duty cycle that has a progressively increasing relationship with the difference) and a HIGH LI signal (preferably a continuously HIGH signal, e.g. a PWM signal with a duty cycle of 100%). The switch driving module 15 subjects the first switch control signal to power amplification, and outputs a HIGH HO signal (preferably a PWM signal with the same duty cycle as the LI signal) and a HIGH LO signal (preferably a continuously HIGH signal, e.g. a PWM signal with a duty cycle of 100%). At this time, the first MOSFET (Q 1) is ON for the duration of the ON time represented by the duty cycle of the HO signal and otherwise OFF, and the second MOSFET (Q2) is continuously ON.

The second switch control signal is adapted to switch the first MOSFET (Q 1) and the second MOSFET (Q2) OFF. For example, the second switch control signal comprises a LOW HI signal and a LOW LI signal, and the switch driving module 15 outputs a LOW HO signal and a LOW LO signal. At this time, the first MOSFET (Q 1) and the second MOSFET (Q2) are both OFF.

The third switch control signal is adapted to switch the first MOSFET (Q1) and the second MOSFET (Q2) OFF.

For example, the third switch control signal comprises a LOW HI signal and a LOW LI signal, and the switch driving module 15 outputs a LOW HO signal and a LOW LO signal. At this time, the first MOSFET (Q 1) and the second MOSFET (Q2) are both OFF. Table 1 is a truth table for the HI signal, the LI signal, the HI signal and the HO signal. X means no signal.

**Table 1**

| HI | LI | HO | LO |
|---|---|---|---|
| 0 | 0 | 0 | 0 |
| 0 | 1 | 0 | 1 |
| 1 | 0 | 1 | 0 |
| 1 | 1 | 1 | 1 |
| X | X | 0 | 0 |

When the HI signal has an input, the HO signal and the HI signal have the same state; when the LI signal has an input, the LO signal and the LI signal have the same state. When the HI signal has no input, the HO signal output is LOW; when the HI signal has no input, the LO signal output is LOW.

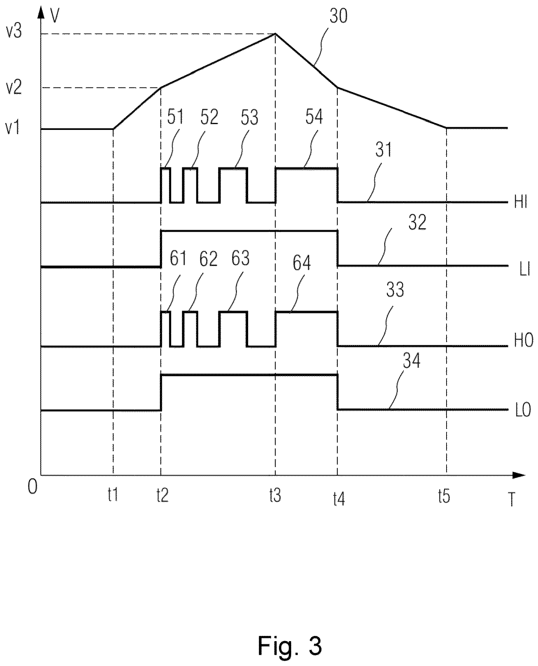

Fig. 3 is a demonstrative schematic diagram showing the correspondence between the bus voltage and the switch control signal according to embodiments of the present invention. In the coordinate system shown in Fig. 3, the horizontal coordinates are time (T) and the vertical coordinates are voltage (V). Assume that the nominal voltage (v1) of the DC bus is 48 volts, the first threshold (v2) is 60 volts, and the maximum voltage (v3) of the DC bus is 70 volts. It can be seen from the DC bus voltage curve 30 that the DC bus voltage may vary.
(1): When the DC bus voltage is the nominal voltage (v1) (corresponding to interval 0 - t1 on the horizontal axis), the HI signal curve 31 and the LI signal curve 32 are both LOW. Correspondingly, the HO signal curve 33 and the LO signal curve are LOW. Thus, the first MOSFET (Q1) and the second MOSFET (Q2) are both OFF, and the energy release circuit is disconnected.
(2): When the DC bus voltage is greater than the nominal voltage (v1) and less than the first threshold (v2) (corresponding to interval t1 - t2 on the horizontal axis), the HI signal curve 31 and the LI signal curve 32 are both LOW. Correspondingly, the HO signal curve 33 and the LO signal curve are LOW. Thus, the first MOSFET (Q1) and the second MOSFET (Q2) are both OFF, and the energy release circuit is disconnected.
(3): When the DC bus voltage is greater than the first threshold (v2) and less than the maximum voltage (corresponding to interval t2 - t3 on the horizontal axis), the LI signal curve 32 and the LO signal curve 34 are continuously HIGH, so the second MOSFET (Q2) is continuously ON. The HI signal curve 31 comprises a first waveform 51, a second waveform 52, a third waveform 53 and a fourth waveform 54. As the DC bus voltage gradually increases, the fourth waveform 54 has a larger duty cycle than the third waveform 53, the third waveform 53 has a larger duty cycle than the second waveform 52, and the second waveform 52 has a larger duty cycle than the first waveform 51. The HO signal curve 33 comprises a fifth waveform 61, a sixth waveform 62, a seventh waveform 63 and an eighth waveform 64. As the DC bus voltage gradually increases, the eighth waveform 64 has a larger duty cycle than the seventh waveform 63, the seventh waveform 63 has a larger duty cycle than the sixth waveform 62, and the sixth waveform 62 has a larger duty cycle than the fifth waveform 61. Thus, the second MOSFET (Q2) is continuously ON, whereas the first MOSFET (Q1) is ON when the HO signal is HIGH, and OFF when the HO signal is LOW.
(4): When the DC bus begins to fall from the maximum voltage and the DC bus voltage value is still greater than the first threshold (v2) (corresponding to interval t3 - t4 on the horizontal axis), the HI signal curve 31, the LI signal curve 32, the HO signal curve 33 and the LO signal curve 34 are continuously HIGH, so the first MOSFET (Q1) and the second MOSFET (Q2) are continuously ON, and the energy release circuit is continuously ON.
(5): When the DC bus voltage value falls to below the first threshold (v2) (corresponding to interval t4 - t5 on the horizontal axis), the HI signal curve 31, the LI signal curve 32, the HO signal curve 33 and the LO signal curve 34 are continuously LOW, so the first MOSFET (Q1) and the second MOSFET (Q2) are continuously OFF, and the energy release circuit is continuously OFF.

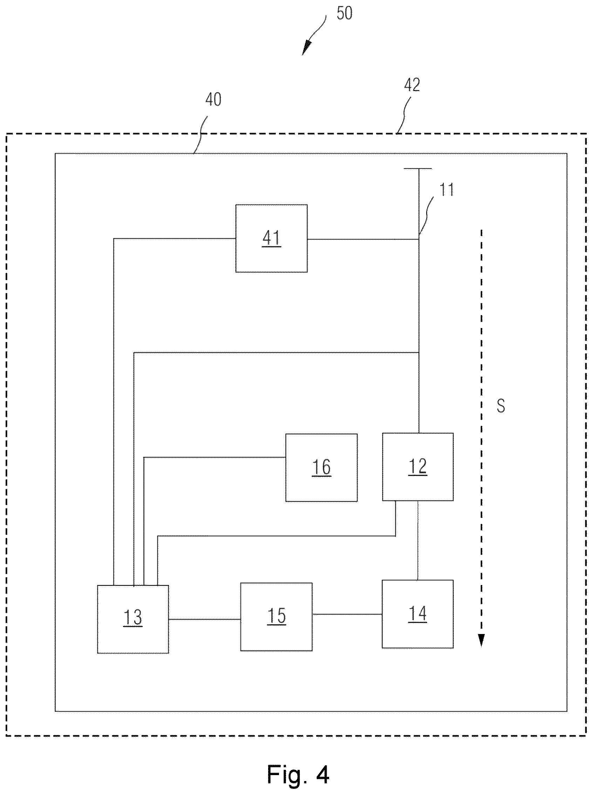

Embodiments of the present invention also propose a control board. For example, the control board is implemented as a motor control board for controlling an electric motor. Fig. 4 is a demonstrative structural drawing of a control board according to embodiments of the present invention.

The control board 50 comprises: a substrate 40; a DC bus 11, arranged on the substrate 40; a resistor module 12, arranged on the substrate 40 and electrically connected to the DC bus 11 to form an energy release circuit of the DC bus 11; a motor driving module 41, arranged on the substrate 40 and configured to drive an electric motor on the basis of the DC bus 11; a control module 13, arranged on the substrate 40 and configured to control the motor driving module 41, determine the difference between a voltage value of the DC bus 11 and a preset first threshold, and generate a first switch control signal on the basis of the difference; and a switch module 14, arranged on the substrate 40 and configured to control the ON time of the energy release circuit on the basis of the first switch control signal, wherein there is a progressively increasing relationship between the ON time and the difference.

In an embodiment, the control board 50 may be implemented as a rigid circuit board or a flexible circuit board. When the control board 50 is implemented as a rigid circuit board, the substrate 40 may comprise a phenolic paper layer, an epoxy paper layer, a polyester glass mat layer or an epoxy glass cloth layer, etc. When the control board 50 is implemented as a flexible circuit board, the substrate 40 may comprise a polyester thin film or a polyimide thin film, etc.

Thus, by integrating a brake chopper in a control board, an onboard brake chopper is realized, which can reduce the installation space and assembly cost of the brake chopper.

In an embodiment, the switch module 14 comprises a first MOSFET and a second MOSFET; the drain of the first MOSFET is connected to the resistor module 12, the source of the first MOSFET is connected to the drain of the second MOSFET, and the gate of the first MOSFET is connected to the control module 13; the gate of the second MOSFET is connected to the control module 13, and the source of the second MOSFET is grounded; the first switch control signal is adapted to keep the second MOSFET switched ON continuously, and to switch the first MOSFET ON for the duration of the ON time.

In an embodiment, the control board 50 comprises a heat dissipating layer 42, arranged at the bottom of the substrate 40, and configured to dissipate heat from the DC bus 11, the resistor module 12, the motor driving module 41, the control module 13 and the switch module 14.

Thus, sharing the heat dissipating layer of the control board obviates the need to provide an additional heat dissipating device for the brake chopper, so costs are reduced and the degree of integration of the control board is increased.

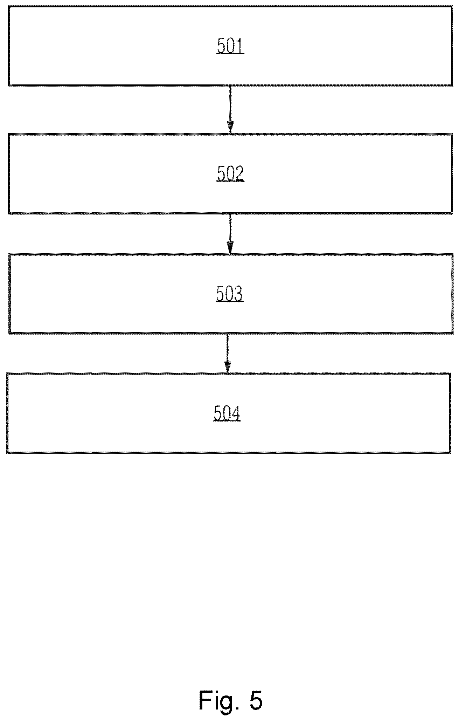

Embodiments of the present invention also propose a bus voltage control method. Fig. 5 is a demonstrative flow chart of a bus voltage control method according to embodiments of the present invention. As Fig. 5 shows, the method comprises:
Step 501: determining a voltage value of a DC bus.
Step 502: determining the difference between the voltage value of the DC bus and a preset first threshold.
Step 503: generating a first switch control signal on the basis of the difference.
Step 504: controlling the ON time of an energy release circuit on the basis of the first switch control signal, wherein there is a progressively increasing relationship between the ON time and the difference.

In an embodiment, the method comprises: acquiring a temperature detection value from a temperature sensor close to the resistor module; when the temperature detection value is greater than or equal to a preset second threshold, generating a second switch control signal; disconnecting the energy release circuit on the basis of the second switch control signal.

In an embodiment, step 503 specifically comprises: generating a PWM signal on the basis of the difference, the PWM signal having a duty cycle which has a progressively increasing relationship with the difference.

In an embodiment, the method comprises: acquiring a low-side potential value of the resistor module when the energy release circuit is in a disconnected state; determining a connection state of the resistor module on the basis of the difference between the low-side potential value of the resistor module and the voltage value of the DC bus; wherein, when the second difference is zero, the connection state of the resistor module is determined to be compliant, and when the second difference is not zero, the connection state of the resistor module is determined to be non-compliant.

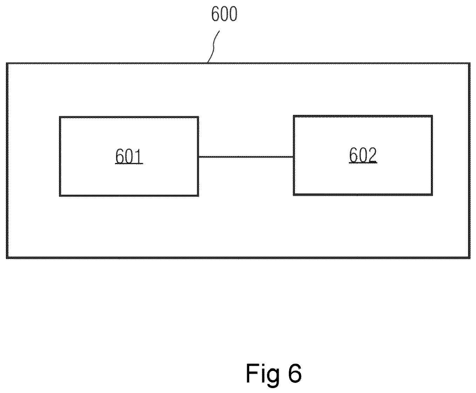

Embodiments of the present invention further propose an electronic device with a processor-memory architecture. Fig. 6 is a structural drawing of an electronic device according to embodiments of the present invention. As shown in Fig. 6, the electronic device 600 comprises a processor 601, a memory 602, and a computer program stored on the memory 602 and executable on the processor 601, wherein any one of the bus voltage control methods above is implemented when the computer program is executed by the processor 601. The memory 602 may specifically be implemented as various types of storage media, such as an electrically erasable programmable read-only memory (EEPROM), a flash memory or a programmable read-only memory (PROM). The processor 601 may be implemented as comprising one or more central processors or one or more field-programmable gate arrays, wherein the field-programmable gate array integrates one or more central processor cores. Specifically, the central processor or central processor core can be implemented as a CPU, MCU or DSP, etc.

It must be explained that not all of the steps and modules in the flows and structural diagrams above are necessary; certain steps or modules may be omitted according to actual requirements. The sequence in which the steps are executed is not fixed, and may be adjusted as needed. The partitioning of the modules is merely functional partitioning, employed for the purpose of facilitating description; during actual implementation, one module may be realized by multiple modules, and the functions of multiple modules may be realized by the same module; these modules may be located in the same device, or in different devices.

Hardware modules in the embodiments may be realized mechanically or electronically. For example, one hardware module may comprise a specially designed permanent circuit or logic device (such as a dedicated processor, such as an FPGA or ASIC) for completing a specific operation. The hardware module may also comprise a programmable logic device or circuit that is temporarily configured by software (e.g. comprising a general processor or another programmable processor) for executing a specific operation. The choice of whether to specifically use a mechanical method, or a dedicated permanent circuit, or a temporarily configured circuit (e.g. configured by software) to realize the hardware module can be decided according to considerations of cost and time.

The embodiments above are merely preferred embodiments of the present invention, which are not intended to define the scope of protection of the present invention. Any amendments, equivalent substitutions or improvements etc. made within the spirit and principles of the present invention shall be included in the scope of protection thereof.

## Claims

1. A brake chopper (10), comprising:
a resistor module (12), electrically connected to a DC bus (11) to form an energy release circuit of the DC bus (11);
a control module (13), for determining the difference between a voltage value of the DC bus (11) and a preset first threshold, and generating a first switch control signal on the basis of the difference;
a switch module (14), for controlling the ON time of the energy release circuit on the basis of the first switch control signal, wherein there is a progressively increasing relationship between the ON time and the difference.

2. The brake chopper (10) as claimed in claim 1, comprising:
a temperature sensor (16) close to the resistor module (12);
the control module (13) being configured to acquire a temperature detection value of the temperature sensor (16), and generate a second switch control signal when the temperature detection value is greater than or equal to a preset second threshold; and the switch module (14) being configured to disconnect the energy release circuit on the basis of the second switch control signal; or
the temperature sensor (16) being configured to generate a third switch control signal when a temperature detection value is greater than or equal to a preset second threshold; and the switch module (14) being configured to disconnect the energy release circuit on the basis of the third switch control signal.

3. The brake chopper (10) as claimed in claim 2, comprising:
a switch driving module (15), arranged between the control module (13) and the switch module (14), and configured to drive the switch module (14) on the basis of the first switch control signal, the second switch control signal and/or the third switch control signal.

4. The brake chopper (10) as claimed in claim 1, wherein
the control module (13) is configured to determine a connection state of the resistor module (12) on the basis of a second difference between a low-side potential value of the resistor module (12) and the voltage value of the DC bus (11) when the energy release circuit is in a disconnected state.

5. The brake chopper (10) as claimed in any one of claims 1 - 4, wherein
the switch module (14) comprises a first MOSFET (metal-oxide semiconductor field-effect transistor) and a second MOSFET;
the drain of the first MOSFET is connected to the resistor module (12), the source of the first MOSFET is connected to the drain of the second MOSFET, and the gate of the first MOSFET is connected to the control module (13); the gate of the second MOSFET is connected to the control module (13), and the source of the second MOSFET is grounded;
the first switch control signal is adapted to keep the second MOSFET switched ON continuously, and to switch the first MOSFET ON for the duration of the ON time.

6. A control board (50), comprising:
a substrate (40);
a DC bus (11), arranged on the substrate (40);
a resistor module (12), arranged on the substrate (40) and electrically connected to the DC bus (11) to form an energy release circuit of the DC bus (11);
a motor driving module (41), arranged on the substrate (40) and configured to drive an electric motor on the basis of the DC bus (11);
a control module (13), arranged on the substrate (40) and configured to control the motor driving module (41), determine the difference between a voltage value of the DC bus (11) and a preset first threshold, and generate a first switch control signal on the basis of the difference; and
a switch module (14), arranged on the substrate (40) and configured to control the ON time of the energy release circuit on the basis of the first switch control signal, wherein there is a progressively increasing relationship between the ON time and the difference.

7. The control board (50) as claimed in claim 6, wherein
the switch module (14) comprises a first MOSFET and a second MOSFET; the drain of the first MOSFET is connected to the resistor module (12), the source of the first MOSFET is connected to the drain of the second MOSFET, and the gate of the first MOSFET is connected to the control module (13); the gate of the second MOSFET is connected to the control module (13), and the source of the second MOSFET is grounded;
the first switch control signal is adapted to keep the second MOSFET switched ON continuously, and to switch the first MOSFET ON for the duration of the ON time.

8. The control board (50) as claimed in claim 6 or 7, comprising:
a heat dissipating layer (42), arranged at the bottom of the substrate (40), and configured to dissipate heat from the DC bus (11), the resistor module (12), the motor driving module (41), the control module (13) and the switch module (14).

9. A bus voltage control method, comprising:
determining (501) a voltage value of a DC bus;
determining (502) the difference between the voltage value of the DC bus and a preset first threshold;
generating (503) a first switch control signal on the basis of the difference;
controlling (504) the ON time of an energy release circuit on the basis of the first switch control signal, wherein there is a progressively increasing relationship between the ON time and the difference.

10. The method as claimed in claim 9, comprising:
acquiring a temperature detection value from a temperature sensor close to the resistor module;
when the temperature detection value is greater than or equal to a preset second threshold, generating a second switch control signal;
disconnecting the energy release circuit on the basis of the second switch control signal.

11. The method as claimed in claim 9, wherein the step of generating (503) a first switch control signal on the basis of the difference comprises:
generating a PWM signal on the basis of the difference, the PWM signal having a duty cycle which has a progressively increasing relationship with the difference.

12. The method as claimed in claim 9, comprising:
acquiring a low-side potential value of the resistor module when the energy release circuit is in a disconnected state;
determining a connection state of the resistor module on the basis of the difference between the low-side potential value of the resistor module and the voltage value of the DC bus; wherein, when the second difference is zero, the connection state of the resistor module is determined to be compliant, and when the second difference is not zero, the connection state of the resistor module is determined to be non-compliant.

13. An electronic device, comprising:
a processor (601);
a memory (602) configured to store an executable instruction of the processor (601);
the processor (601) being configured to read the executable instruction from the memory (602) and execute the executable instruction to implement the bus voltage control method as claimed in any one of claims 9 - 12.

14. A computer-readable storage medium on which a computer instruction is stored, wherein the bus voltage control method as claimed in any one of claims 9 - 12 is implemented when the computer instruction is executed by a processor.
